# FASCICULE DE BREVET EUROPEEN

(11) **EP 1 304 949 B1**
(45) Date de publication et mention de la délivrance du brevet: **04.05.2005**
(21) Numéro de dépôt: 01963054.0
(22) Date de dépôt: 02.08.2001
(51) Int. Cl.: A47J 31/40

(54) **GROUPE PERCOLATEUR A CHAMBRE D'INFUSION MOBILE ET DEMONTABLE SANS OUTILLAGE**
AUTOMATISCHE KAFFEEMASCHINE MIT EINER BEWEGBAREN BRÜHKOPFEINHEIT DIE OHNE WERKZEUG ABBAUBAR IST
PERCOLATOR UNIT WITH MOBILE INFUSION CHAMBER AND DETACHABLE WITHOUT USING TOOLS

(30) Priorité: 02.08.2000 FR 0010220
(43) Date de publication de la demande: 02.05.2003
(73) Titulaire: Versini, Rolland, 13008 Marseille (FR)
(72) Inventeur: Versini, Rolland, 13008 Marseille (FR)
(74) Mandataire: Roman, Michel
(86) Numéro de dépôt international: PCT/FR2001/002531
(87) Numéro de publication internationale: WO 2002/009563

(56) Documents cités:
- EP-A- 0 659 377
- EP-A- 0 931 491
- DE-A- 2 006 930

## Description

La présente invention a pour objet un groupe percolateur à chambre d'infusion mobile et démontable sans outillage.

Il est destiné à la confection, dans des conditions entièrement automatiques et sans intervention humaine, d'une boisson chaude telle qu'un café de type "express", c'est à dire délivré et mis à la disposition du consommateur immédiatement au sortir de la phase de percolation.

Les dispositifs réalisés à ce jour sont le plus souvent basés sur l'utilisation d'un cylindre vertical constituant la chambre d'infusion dans lequel est déversé une certaine quantité de café moulu retenu par une grille constituant le fond dudit cylindre. Un piston se déplaçant verticalement vient d'abord compresser la poudre de café, au travers de laquelle de l'eau chaude est alors injectée puis évacuée ensuite.

La présence du piston mobile au-dessus du cylindre rend l'opération de déversement de la poudre de café dans celui-ci malaisée, en imposant un cheminement compliqué et des moyens de guidage mobiles.

Le brevet N° EP 0 521 861, du même inventeur remédie partiellement à ces défauts. Il décrit un dispositif équipé d'un groupe mécanique disposé horizontalement dans lequel les mouvements des pièces mobiles sont tous provoqués par deux crémaillères à déplacements horizontaux inversés entraînant une série de traverses coulissant sur des colonnes, la chambre d'infusion à axe horizontal, dans laquelle le passage de l'eau chaude se fait verticalement, étant prolongée par une chambre de remplissage mobile horizontale recevant le déversement direct de la poudre de café.

Le brevet N° EP 0 634 904, déposé également par l'auteur de la présente demande, fait état d'un percolateur constitué d'un groupe mécanique horizontal amovible équipé d'une chambre d'infusion à fond mobile prolongée par une chambre de remplissage se déplaçant conjointement avec ledit fond mobile, les organes principaux du groupe étant réalisé à partir de profilés fonctionnels, en particulier un rail fixe, la chambre d'infusion ainsi qu'une pièce mobile coulissant sur ledit rail fixe et portant le piston de compression ainsi qu'une crémaillère principale entraînant une crémaillère secondaire par l'intermédiaire d'un pignon fixe, la chambre de remplissage et le fond mobile coulissant également sur ce rail fixe.

Le document EP-0931491 décrit le préambule de la revendication 1.

Ces dispositifs sont relativement complexes en raison de la présence d'une chambre de remplissage et de l'entraînement des pièces mobiles par plusieurs crémaillères, tout en restant amovible.

Le dispositif selon la présente invention a pour objectif de remédier à ces inconvénients. Il permet en effet de réaliser une machine automatique de percolation sous pression comportant un petit nombre de pièces extrêmement fiables et d'un entretient particulièrement aisé, et surtout présentant l'avantage de pouvoir utiliser deux moulins à café, donc pour deux cafés différents, normal et décaféiné, par exemple, ou de deux qualités de cafés différents.

Il est constitué d'un groupe mécanique disposé horizontalement comportant trois éléments :
- une partie fixe incluant une embase, la motorisation, l'entraînement et le piston d'injection,
- un tiroir amovible portant le conduit d'écoulement du café et, d'autre part,
- une partie mobile comprenant une chambre d'infusion, un contre-piston et un racleur articulé dont les mouvements sont provoqués par les déplacement de la chambre d'infusion engendrés par deux tirants actionnés par une vis entraînée par un moto-réducteur.

Sur les dessins annexés, donnés à titre d'exemple non limitatif d'une des formes de réalisation de l'objet de l'invention:
la figure 1 montre le groupe mécanique vu de dessus,
la figure 2 est une coupe transversale agrandie suivant les flèches F1 de la figure précédente,
la figure 3 est une coupe transversale partielle agrandie suivant les flèches F2 de la figure 1,
les figures 4 et 5 sont des agrandissements du détail D1 de la figure 3 représentant respectivement le système de verrouillage en position bloquée et débloquée.
la figure 6 est une représentation agrandie du tiroir amovible,
la figure 7 montre dans les mêmes conditions la tiroir vu de côté,
la figure 8 montre le tiroir vu en bout, suivant la flèche F1 de la figure 6,
la figure 9 est une coupe axiale partielle montrant la chambre d'infusion durant la phase de chargement,
la figure 10 montre dans les mêmes conditions la position des éléments mobiles au cours de la phase d'infusion,
les figures 11 et 12 illustrent respectivement deux étapes successives de la phase d'extraction
et la figure 13 montre l'action du dispositif de raclage au cours de la phase de balayage.

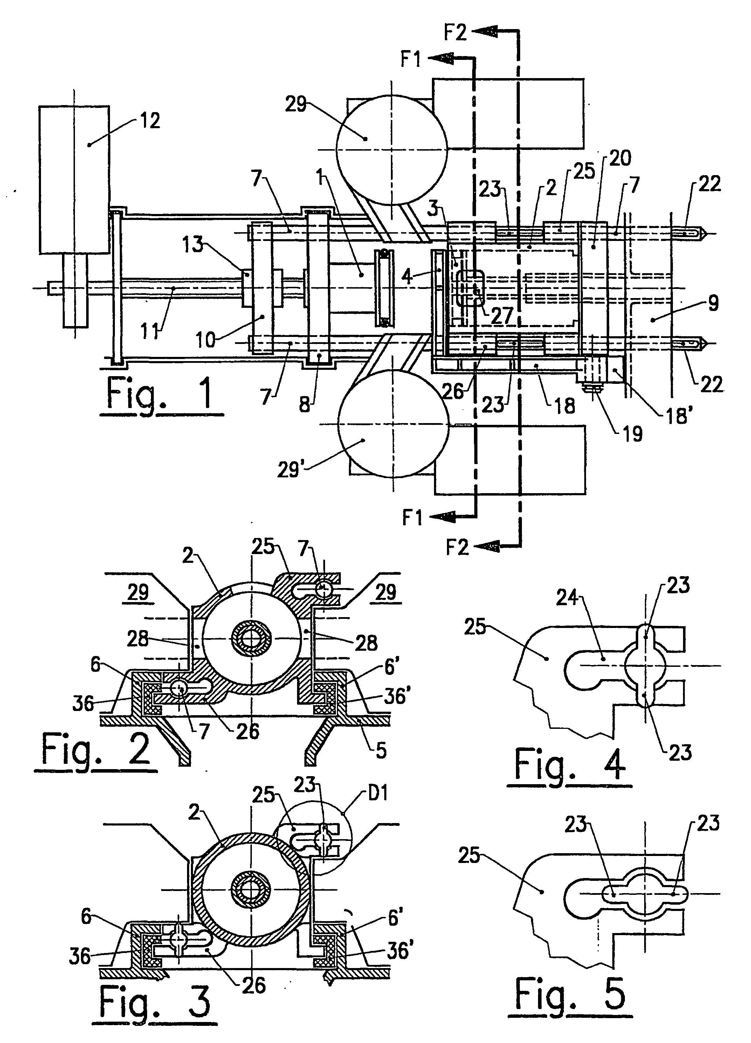

Le groupe de percolation, figures 1 à 13, est constitué pour l'essentiel d'un piston fixe 1, d'une chambre d'infusion 2 mobile, d'un contre-piston 3 d'extraction également mobile et situé à l'intérieur de la chambre d'infusion, et d'un racloir 4 articulé permettant l'évacuation du marc.

L'ensemble est monté sur une embase 5 comportant deux rails horizontaux 6, 6' le long desquels se déplace, sur la partie fixe arrière une plaque mobile 10 actionnée par le système d'entraînement. Sur la partie avant, les mêmes rails 6, 6' reçoivent deux rails secondaires 36, 36' solidaires d'un tiroir amovible comportant une platine frontale 9 de blocage et un conduit d'écoulement 17 du café. Sur les rails secondaires se déplacent la chambre d'infusion 2 et un ensemble racleur.

Le mouvement de la chambre d'infusion 2 est assuré grâce à deux tirants 7 coulissant dans des perçages prévus à cet effet dans une platine porte piston 8 verticale solidaire de l'embase 5. L'une des extrémités de chacun des tirants 7 est fixée sur la plaque mobile 10 qui peut se déplacer dans les deux sens grâce à une vis 11 parallèle à l'axe de la chambre d'infusion, entraînée par un moto-réducteur 12 et tournant dans un écrou 13 solidaire de la plaque mobile.

Le contre-piston 3, équipé d'une grille 37 sur sa partie avant, entraîné lors de la phase de compression par un épaulement annulaire 14 disposé au fond de la chambre d'infusion 2, est traversé par un orifice 15 prolongé à l'arrière par un tube 16 coulissant dans le conduit d'écoulement 17 solidaire de la platine amovible 9 de blocage.

L'ensemble racleur est formé d'un racloir 4 porté par un bras latéral 18 tournant autour d'un pivot 19 horizontal perpendiculaire à l'axe longitudinal du percolateur et monté sur une pièce mobile 20 maintenue en position de repos par un ressort 21 et une butée 38, cette pièce mobile coulissant sur les rails secondaires 36, 36' et étant traversée par les tirants 7. Le bras 18 comporte un dispositif tel que came 18' agencé pour faire basculer le bras vers le bas en butant sur la platine amovible 9 lorsque la pièce mobile est poussée contre cette demière par la chambre d'infusion 2 en fin de phase d'extraction, une butée de rappel ou une crémaillère obligeant, lors du retour, le dispositif à reprendre sa position initiale.

Les éléments mobiles, chambre d'infusion 2, contre-piston 3 et ensemble racleur sont embrayés sur les tirants 7 grâce à des ailettes 23 de ces derniers situées sur les deux côtés de la chambre d'infusion 2. Les tirants peuvent pivoter d'un quart de tour de façon à permettre le verrouillage ou la libération de l'ensemble. Les corps de la chambre d'infusion et de la pièce mobile 20 de l'ensemble racleur comportent à cet effet des passages 24 dont la forme leur permet de coulisser sur les ailettes lorsque les tirants sont en position déverrouillée. La chambre d'infusion comporte pour chaque tirant des supports 25, 26 doubles portant ces passages, disposés de part et d'autre des ailettes 23 de façon à ce que la chambre d'infusion soit entraînée dans les deux sens par les mouvements de la plaque mobile 10 et des tirants 7. La platine frontale 9 comporte des trous 39 permettant le passage des tirants quelle que soit leur position. Ces derniers, après la phase de balayage, dépassent à l'avant de la platine frontale pour permettre à l'utilisateur de les faire pivoter d'un quart de tour grâce à des ailettes de manoeuvre 22 pour effectuer le déverrouillage afin d'extraire l'ensemble pour le nettoyage et l'entretien.

Cette disposition permet de démonter la partie souillée de l'appareil très facilement et d'extraire le tiroir portant la platine frontale 9, le conduit d'écoulement 17 et les rails secondaires 36, 36', ainsi que la chambre d'infusion 2, le contre-piston 3 et l'ensemble racleur 4, 18 qui sont montés sur ce tiroir, ce qui dégage entièrement le piston fixe 1. L'entretient est ainsi grandement facilité et peut être effectué sans problème par un personnel non spécialisé.

Le remplissage de la chambre d'infusion peut s'effectuer par le dessus grâce à une ouverture supérieure 27, pour complément de mouture il s'effectuera cependant de préférence sur les côtés, par des ouvertures latérales 28 permettant d'utiliser deux broyeurs 29, 29' pouvant être commandés individuellement et débiter à la demande deux produits distincts, par exemple du café normal et du café décaféiné, ou deux cafés différents très complémentaires pour obtenir un bon "expresso".

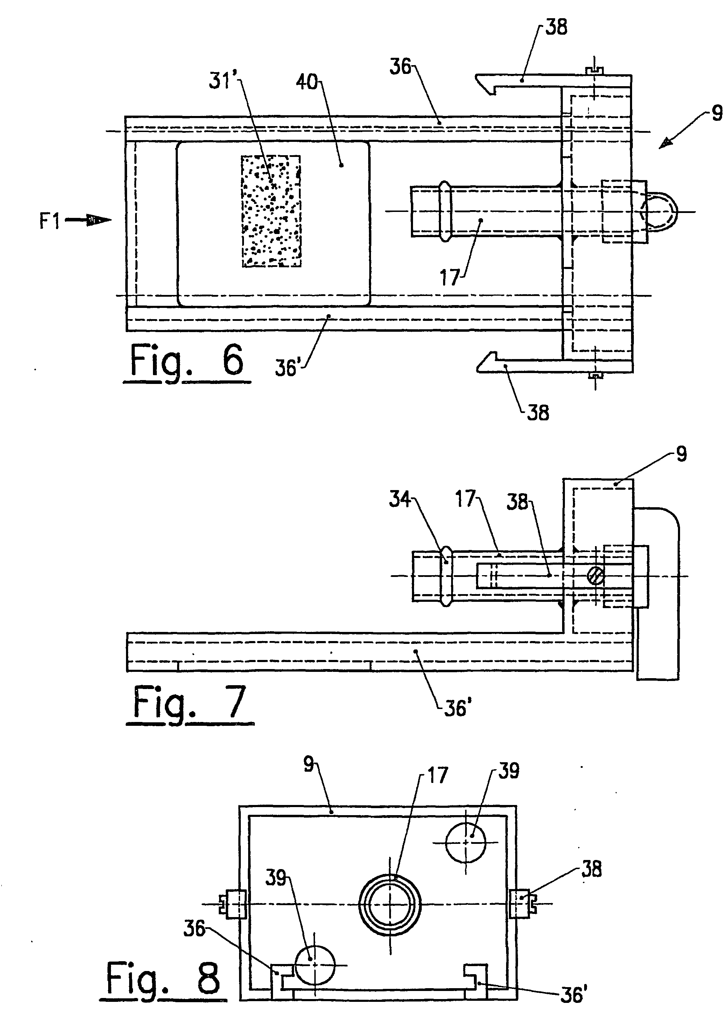

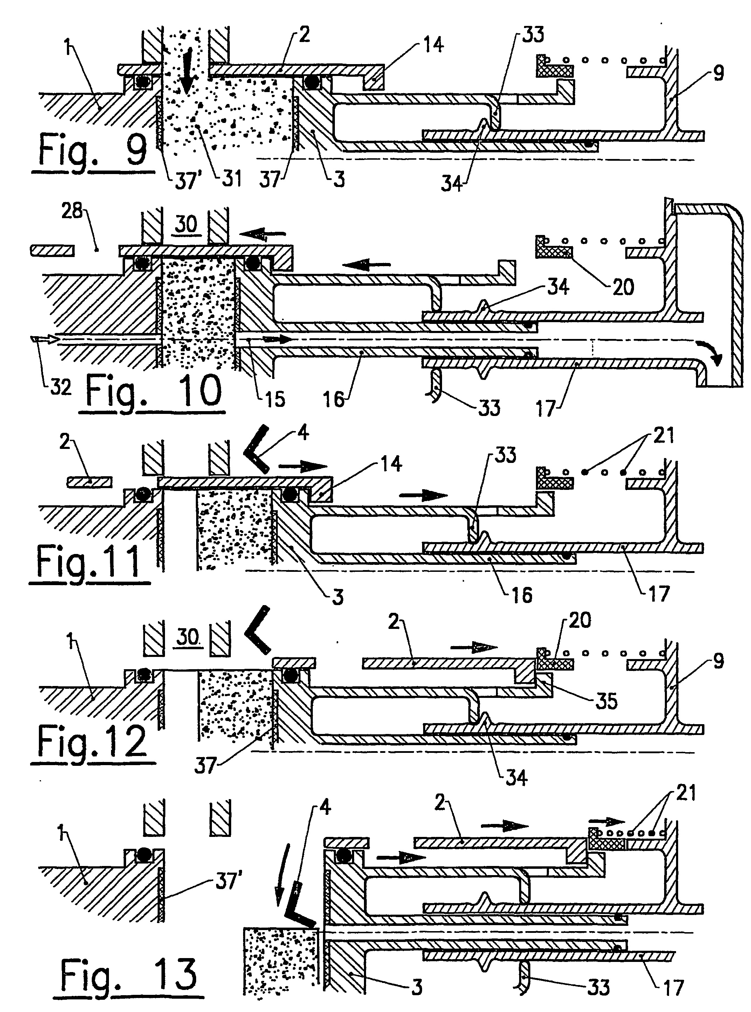

L'appareil fonctionne suivant un cycle comportant les phases suivantes :
- Remplissage : la chambre d'infusion 2 est positionnée de façon à ce que la ou les ouvertures 27, 28 se trouvent face à la sortie des broyeurs 29, 29', le contre-piston 3 se trouvant au fond de la chambre d'infusion (figure 9).
- Compression : la chambre d'infusion est déplacée par les tirants 7 en direction du piston fixe 1 en entraînant le contre-piston 3 grâce à l'épaulement annulaire 14, ce qui a pour effet d'obstruer les sorties 30 des broyeurs 29, 29' et de comprimer la mouture 31 (figure 10).
- Infusion : l'eau chaude 32 arrive par le piston fixe 1 traverse une grille 37' montée sur la surface de ce piston, et la mouture 31. La boisson ainsi obtenue ressort par le contre-piston 3 et arrive dans le conduit d'écoulement 17 pour sortir de l'appareil (figure 10).
- Extraction : la chambre d'infusion 2 est mise en mouvement en sens inverse en entraînant le contre-piston 3 par frottement. Ce dernier comporte deux languettes flexibles 33 butant sur un bossage annulaire 34 solidaire du conduit. d'écoulement 17, ce qui limite son déplacement dans un premier temps (figure 11). La chambre d'infusion continue son mouvement jusqu'à ce que son épaulement annulaire 14 rencontre en même temps deux butées 35 solidaires du contre-piston 3 et la pièce mobile 20 du mécanisme de raclage (figure 12).
- Balayage : En continuant son mouvement, la chambre d'infusion 2 entraîne le contre-piston 3 et la pièce mobile 20, ce qui a pour effet de faire passer le racloir 4 sur la face frontale du contre-piston et d'assurer l'évacuation du marc 31' par une ouverture 40 prévue à cet effet sur l'embase 5 (figures 6, 13). Lorsque la chambre d'infusion repart en sens inverse pour un nouveau cycle, le racloir 4 reprend sa position haute grâce à un ressort de rappel et le contre-piston est entraîné par frottement du joint jusqu'à la rencontre des deux languettes 33 avec le bossage annulaire 34.

La face frontale du contre-piston 3 et la grille 37 pourront avantageusement être bombée suivant le parcours effectué par le racloir 4 lors de l'évacuation du marc 31', de façon à améliorer l'efficacité du balayage.

L'entraînement de la vis 11 par le moto-réducteur 12 sera de préférence effectué au moyen d'un accouplement rapide, l'écrou 13 d'entraînement monté sur la plaque mobile 10 pouvant comporter une boîte à pression, l'arrêt et l'inversion de marche étant commandés directement par un capteur de couple électronique contrôlant la pression, ce qui permet de supprimer les micro-contacts habituellement utilisés.

Selon une variante d'exécution, l'unité d'entraînement est composée d'un vérin à double effet actionné au moyen d'eau sous pression provenant de la pompe fournissant également l'eau destinée à infuser le café. Dans ce cas, le contrôle de la position du vérin, ainsi que de la quantité d'eau à infuser, pourra avantageusement être effectué grâce à un unique débitmètre associé à un système programmable actionnant des électrovannes.

Le positionnement des divers éléments constitutifs donne à l'objet de l'invention un maximum d'effets utiles qui n'avaient pas été, à ce jour, obtenus par des dispositifs similaires.

## Revendications

1. Groupe percolateur à chambre d'infusion mobile et démontable sans outillage, destiné à la confection, dans des conditions entièrement automatiques, d'une boisson chaude telle qu'un café de type "express", grâce à un cycle comprenant des phases de remplissage, de compression, d'infusion, d'extraction et de balayage du marc,
la combinaison d'un groupe mécanique étant disposé horizontalement et comportant d'une part une partie fixe incluant une embase (5) pourvue de deux rails(6, 6'), la motorisation, l'entraînement et un piston d'injection (1) et, d'autre part une partie mobile comprenant une chambre d'infusion (2), un contre-piston (3) et un ensemble racleur articulé (4, 18), **caractérisé par** les mouvements du contre-piston et du racleur étant provoqués par les déplacement de ladite chambre d'infusion assurés grâce à deux tirants (7) coulissant dans des perçages prévus à cet effet dans une platine porte-piston (8) verticale solidaire de l'embase (5), l'une des extrémités de chaque tirant étant fixée sur une plaque mobile (10) se déplaçant sur les rails (6, 6') et actionnée par un système d'entraînement apte à mouvoir dans les deux sens la chambre d'infusion (2) le long de deux rails secondaires (36, 36') horizontaux solidaires d'un tiroir amovible portant une platine frontale (9) et le conduit d'écoulement (17) du café, lesdits rails secondaires coulissant dans les deux rails (6, 6') de l'embase (5).

2. Groupe percolateur selon la revendication 1, **se caractérisant par le fait que** le système d'entraînement est constitué d'une vis (11) parallèle à l'axe de la chambre d'infusion, entraînée par un moto-réducteur (12) et tournant dans un écrou (13) solidaire de la plaque mobile (10).

3. Groupe percolateur selon la revendication 2, **se caractérisant par le fait que** l'entraînement de la vis (11) par le moto-réducteur (12) est effectué au moyen d'un accouplement rapide, l'écrou (13) d'entraînement monté sur la plaque mobile (10) comportant une boîte à pression, l'arrêt et l'inversion de marche étant commandés directement par un capteur de couple électronique contrôlant la pression de façon à permettre la suppression des micro-contacts habituellement utilisés.

4. Groupe percolateur selon la revendication 1, **se caractérisant par le fait que** le système d'entraînement est composée d'un vérin à double effet actionné au moyen d'eau sous pression provenant de la pompe fournissant également l'eau destinée à infuser le café, et que le contrôle de la position du vérin, ainsi que de la quantité d'eau à infuser est effectué grâce à un unique débitmètre associé à un système programmable actionnant des électrovannes.

5. Groupe percolateur selon l'une quelconque des revendications précédentes, **se caractérisant par le fait que** le contre-piston (3) est entraîné par un épaulement annulaire (14) disposé au fond de la chambre d'infusion (2) et agissant soit sur la tête, soit sur deux butées (35) solidaires dudit contre-piston.

6. Groupe percolateur selon la revendication 5, **se caractérisant par le fait que** le contre-piston (3) comporte deux languettes flexibles (33) butant sur un bossage annulaire (34) solidaire du conduit d'écoulement (17) de manière à limiter son déplacement au début de la phase d'extraction.

7. Groupe percolateur selon l'une quelconque des revendications précédentes, **se caractérisant par le fait que** pour la phase d'infusion l'eau chaude (32) arrive par le piston fixe (1) et traverse la mouture (31), la boisson ainsi obtenue ressortant par un orifice (15) du contre-piston (3) prolongé à l'arrière par un tube (16) coulissant dans le conduit d'écoulement (17) pour sortir de l'appareil.

8. Groupe percolateur selon l'une quelconque des revendications précédentes, **se caractérisant par le fait que** le racloir (4) est porté par un bras (18) latéral tournant autour d'un pivot (19) horizontal perpendiculaire à l'axe longitudinal du percolateur et monté sur une pièce mobile (20) coulissant sur les rails secondaires (36, 36') et maintenue en position de repos par un ressort (21) et une butée (38), le bras (18) comportant un dispositif tel qu'une came (18') agencé pour faire basculer ledit bras (18) vers le bas en butant sur la platine frontale (9), une butée de rappel ou une crémaillère obligeant, lors du retour, le dispositif à reprendre sa position initiale.

9. Groupe percolateur selon la revendication 8, **se caractérisant par le fait que** la face frontale du contre-piston (3) est bombée suivant le parcours effectué par le racloir (4) lors de l'évacuation du marc (31'), de façon à améliorer l'efficacité du balayage.

10. Groupe percolateur selon la revendication 8, **se caractérisant par le fait que** la chambre d'infusion (2), le contre-piston (3) et la pièce mobile (20) de l'ensemble racleur sont entraînés par les tirants (7) grâce à des ailettes (23) de ces derniers situées sur les côtés de la chambre d'infusion (2), les tirants pouvant pivoter d'un quart de tour de façon à permettre le verrouillage ou la libération de l'ensemble, les corps de la chambre d'infusion et de la pièce mobile (20) de l'ensemble racleur comportant à cet effet des passages (24) dont la forme leur permet de coulisser sur les ailettes lorsque les tirants sont en position déverrouillée.

11. Groupe percolateur selon la revendication 10, **se caractérisant par le fait que** la platine frontale (9) comporte des trous (39) permettant le passage des tirants quelle que soit leur position, les dits tirants, après la phase de balayage, dépassent à l'avant de la platine frontale pour permettre à l'utilisateur de les faire pivoter d'un quart de tour grâce à des ailettes de manoeuvre (22) pour effectuer le déverrouillage afin d'extraire l'ensemble pour le nettoyage et l'entretien.

12. Groupe percolateur selon la revendication 10, **se caractérisant par le fait que** la chambre d'infusion (2) comporte pour chacun des tirants (7) des supports (25, 26) doubles portant les passages (24) et disposés de part et d'autre des ailettes (23) de façon à ce que la chambre d'infusion soit entraînée dans les deux sens par les mouvements des tirants (7).

13. Groupe percolateur selon l'une quelconque des revendications précédentes, **se caractérisant par le fait que** le remplissage de la chambre d'infusion (2) s'effectue par le dessus grâce à une ouverture supérieure (27).

14. Groupe percolateur selon l'une quelconque des revendications 1 à 12, **se caractérisant par le fait que** le remplissage de la chambre d'infusion (2) s'effectue sur les côtés, par des ouvertures latérales (28) permettant d'utiliser deux broyeurs (29, 29') pouvant être commandés individuellement et débiter à la demande deux cafés distincts tels que du café normal et du café décaféiné, ou deux cafés complémentaires selon la demande de l'utilisateur.

## Patentansprüche

1. Perkolator-Aggregat mit beweglicher Brühkammer, die ohne Werkzeug zerlegbar und bestimmt ist zur vollautomatischen Herstellung heißer Getränke, zum Beispiel von Espressokaffe, in einem Ablaufzyklus mit den Phasen Befüllen, Komprimieren, Brühen, Extrahieren, Ausstoßen des Kaffeesatzes, bestehend aus, einerseits, einer horizontal angeordneten, mechanischen Baugruppe mit einer Grundplatte (5), auf der zwei Schienen (6, 6') angeordnet sind, dem Motor, dem Antrieb und einem Injektorkolben (1) sowie andererseits aus einem beweglichen Teil mit einer Brühkammer (2), einem Gegenkolben (3) und einer Schaberbaugruppe mit Gelenken (4, 18), **gekennzeichnet dadurch, dass** die Bewegungen des Gegenkolbens und des Schabers durch die Bewegungen der genannten Brühkammer gesteuert werden, wozu zwei Zugstäbe (7) dienen, die in den hierzu in der Kolbenführungsplatte (8) vorgesehenen Öffnungen laufen, wobei die Kolbenführungsplatte (8) senkrecht steht und mit der Grundplatte (5) fest verbunden ist; ein Ende jeder Zugstange ist mit einer beweglichen Platte (10) verbunden, die in den Schienen (6, 6') läuft und von einem Antriebssystem bewegt wird, das die Brühkammer (2) in beiden Richtungen entlang den beiden horizontalen Sekundärschienen (36, 36') verfahren kann, welche mit einer beweglichen Schublade mit Frontplatte (9) und der Auslassleitung (17) des Kaffees fest verbunden sind, und wo die genannten Sekundärschienen in den beiden Schienen (6, 6') der Grundplatte (5) verschiebbar angeordnet sind.

2. Perkolator-Aggregat gemäß Patentanspruch 1, **gekennzeichnet dadurch, dass** das Antriebssystem aus einer Schraube (11) besteht, die parallel zur Achse der Brühkammer angeordnet ist, von einem Getriebemotor (12) angetrieben wird und in einer Mutter (13) dreht, die mit der beweglichen Platte (10) fest verbunden ist.

3. Perkolator-Aggregat gemäß Patentanspruch 2, **gekennzeichnet dadurch, dass** der Antrieb der Schraube (11) durch den Getriebemotor (12) mit Hilfe einer Schnellkupplung erfolgt, wobei die zum Antrieb dienende Mutter (13), die auf der beweglichen Platte (10) montiert ist, eine Druckkammer besitzt, Stillstand und Bewegungsumkehr direkt von einem elektronischen Drehmomentgeber gesteuert werden, der den Druck überwacht, so dass die sonst üblichen Mikroschalter wegfallen können.

4. Perkolator-Aggregat gemäß Patentanspruch 1, **gekennzeichnet dadurch, dass** das Antriebssystem aus einer doppeltwirkenden Schraube besteht, die von dem aus der Pumpe kommenden, druckbeaufschlagten Wasser betätigt wird, die auch das Wasser zum Brühen des Kaffees liefert und dass die Position des Stellelements wie auch die Menge des Brühwassers durch einen einzigen Durchflussmesser gesteuert werden, der einem die Magnetventile betätigenden, programmierbaren System zugeordnet ist.

5. Perkolator-Aggregat gemäß einem der vorstehenden Patentansprüche, **gekennzeichnet dadurch, dass** der Gegenkolben (3) durch eine ringförmige Schulter (14) am Boden der Brühkammer (2) angetrieben wird, die entweder auf den Kopf oder auf die beiden, mit dem Gegenkolben fest verbundenen Anschläge (35) wirkt.

6. Perkolator-Aggregat gemäß Patentanspruch 5, **gekennzeichnet dadurch, dass** der Gegenkolben (3) zwei flexible Zungen (33) besitzt, die sich an eine mit der Auslassleitung (17) fest verbundene, ringförmige Erhöhung (34) anlegen, so dass seine Bewegung zu Beginn der Extraktionsphase begrenzt wird.

7. Perkolator-Aggregat gemäß einem der vorstehenden Patentansprüche, **gekennzeichnet dadurch, dass** das heiße Wasser (32) in der Brühphase durch den festen Kolben (1) zuläuft, das Mehl (31) durchströmt, das so erhaltene Getränk durch eine Öffnung (15) im Gegenkolben (3) strömt, an deren Rückseite sich ein in der Ablassleitung (17) verschiebbares Rohr (16) anschließt, und damit aus dem Gerät abfließt.

8. Perkolator-Aggregat gemäß einem der vorstehenden Patentansprüche, **gekennzeichnet dadurch, dass** der Schieber (4) von einem seitlich angeordneten Arm (18) getragen wird, der durch ein horizontales, rechtwinklig zur Längsachse des Perkolators liegendes Gelenk drehbar gelagert ist, und auf einem Schiebestück (20) montiert ist, das in den Sekundärschienen (36, 36') verschiebbar ist und von einer Feder (21) und einem Anschlag (38) in Ruheposition gehalten wird, wobei der Arm (18) eine Vorrichtung, zum Beispiel einen Nocken (18'), besitzt, so dass der Arm (18) nach unten geschwenkt wird und sich auf die Frontplatte (9) auflegt sowie eine Rückholfeder oder eine Zahnstange, um die Vorrichtung auf dem Rückweg in ihre Ausgangsposition zurückzuholen.

9. Perkolator-Aggregat gemäß Patentanspruch 8, **gekennzeichnet dadurch, dass** die Frontseite des Gegenkolbens (3) entsprechend der Bewegung des Schieber (4) beim Ausstoßen des Kaffeesatzes (32') gewölbt ist, um das Ausstoßen möglichst effizient zu machen.

10. Perkolator-Aggregat gemäß Patentanspruch 8, **gekennzeichnet dadurch, dass** die Brühkammer (2), der Gegenkolben (3) und das Schiebestück (20) der Schieber-Baugruppe durch Zugstangen (7) angetrieben werden und zwar mit Hilfe von Zungen (23) der letzteren, die auf den Seiten der Brühkammer (2) angeordnet sind, wobei die Zugstangen um eine viertel Umdrehung geschwenkt werden können, um die Baugruppe zu ver- oder zu entriegeln, wozu die Brühkammer und das Schiebestück (20) der Schieberbaugruppe Durchgänge (24) besitzen, deren Form es ihnen ermöglicht, auf den Zungen verschoben zu werden, wenn die Zugstangen in entriegelter Stellung sind.

11. Perkolator-Aggregat gemäß Patentanspruch 10, **gekennzeichnet dadurch, dass** die Frontplatte (9) mit Löchern (39) zur Durchführung der Zugstangen versehen sind, und zwar unabhängig von deren Stellung, so dass die Zugstangen nach der Ausstoßphase vor die Frontplatte hervorstehen, damit der Benutzer sie zum Zweck des Entriegelns mit den Bedienflügeln (22) um eine viertel Umdrehung schwenken kann und die gesamte Baugruppe zur Reinigung und Wartung herauszuziehen.

12. Perkolator-Aggregat gemäß Patentanspruch 10, **gekennzeichnet dadurch**, das die Brühkammer (2) für jede Zugstange (7) doppelte Halterungen (25, 26) mit Durchgängen (24) besitzt, die beidseitig der Flügel (23) angeordnet sind, so dass die Brühkammer durch die Bewegung der Zugstangen (7) in beiden Richtungen mitbewegt wird.

13. Perkolator-Aggregat gemäß einem der vorstehenden Patentansprüche, **gekennzeichnet dadurch, dass** das Befüllen der Brühkammer (2) von oben durch eine obere Öffnung (27) erfolgt.

14. Perkolator-Aggregat gemäß einem der vorstehenden Patentansprüche 1 bis 12, **gekennzeichnet dadurch, dass** das Befüllen der Brühkammer (2) von den Seiten her durch seitliche Öffnungen (28) erfolgt, wodurch der Einsatz von zwei Mahlwerken (29, 29') möglich wird, die einzeln betätigt werden können und mit denen bei Bedarf zwei verschiedene Kaffeesorten gemahlen werden können, zum Beispiel normaler und koffeinfreier Kaffee, oder zwei weitere Kaffeesorten, je nach Wunsch des Benutzers.

## Claims

1. Percolator with tool-free removable and mobile infusion chamber used to prepare, in entirely automatic conditions, a hot beverage such as coffee of the "expresso" type using a cycle which includes filling, compressing, infusing, extracting and spent coffee sweeping phases,
the combination of a mechanical assembly arranged horizontally and consisting of, on the one hand a fixed part including a base (5) equipped with two rails (6, 6'), the motor, drive and an injection piston (1) and, on the other, a mobile part comprising infusion chamber (2), counter-piston (3) and scraper assembly (4, 18), **characterised by** counter-piston and the scraper movements caused by displacements of the aforementioned infusion chamber by the action of two rods (7) sliding in drilled holes provided for this purpose in a mobile vertical piston holder plate (8) vertically joined to base (5), one of the ends of each rod being fixed on a mobile plate (10) moving on rails (6, 6') and operated by a drive system that is able to move infusion chamber (2) in both directions along two horizontal secondary rails (36, 36 ') joined to a removable drawer with front plate (9) and coffee discharge pipe (17), the aforementioned secondary rails sliding in both rails (6, 6') of base (5).

2. Percolator according to claim 1, **characterised in that** the drive system consists of a screw (11) parallel to the axis of the infusion chamber, driven by a geared motor unit (12) and turning in a nut (13) joined to mobile plate (10).

3. Percolator according to claim 2, **characterized in that** screw (11) is driven by geared motor (12) through a quick coupling, drive nut (13) fitted on mobile plate (10) with a pressure box, stopping and reverse rotation being controlled directly by an electronic torque sensor which controls the pressure so that the microswitches usually used can be eliminated.

4. Percolator according to claim 1, **characterised in that** the drive system has a dual-acting actuator operated by pressurized water drawn from the pump also supplying water for infusing the coffee, and that the actuator position control and the quantity of water to be infused are also measured by a single flowmeter associated with a programmable system that actuates the solenoid valves.

5. Percolator according to any one of the aforesaid claims, **characterised in that** counter-piston (3) is driven by an annular shoulder (14) arranged at the bottom of infusion chamber (2) and acting either on the head or on two stops (35) joined to the said counter-piston.

6. Percolator according to claim 5, **characterized in that** counter-piston (3) has two flexible strips (33) butting against an annular embossing (34) on pipe (17) so as to limit its movement at the start of the extraction phase.

7. Percolator according to any of the aforesaid claims, **characterized in that** hot water for infusion (32) arrives via fixed piston (1) and passes through the ground coffee (31), the beverage thus obtained leaving by a orifice (15) on counter-piston (3) extended at the rear by a tube (16) sliding in discharge pipe (17) in order to exit the apparatus.

8. Percolator according to any of the aforesaid claims, **characterized in that** scraper (4) is carried by a side arm (18) turning around a horizontal pivot (19) perpendicular to the longitudinal axis of the percolator and assembled on a mobile part (20) sliding on secondary rails (36, 36') and held in position by a spring (21) and a stop (38), arm (18) comprising a device such as a cam (18') arranged to tilt aforementioned arm (18) downwards whilst butting against front plate (9), a return stop or a rack ensuring that the device returns to its initial position.

9. Percolator according to claim 8, **characterized in that** the front face of counter-piston (3) is dished according to the travel executed by scraper (4) when evacuating the spent coffee (31'), so as to improve the efficiency of sweeping.

10. Percolator according to claim 8, **characterized in that** infusion chamber (2), counter-piston (3) and mobile part (20) of the scraping unit are driven by rods (7) thanks to the latter's wings (23) situated on the sides of infusion chamber (2), the rods being capable of swivelling one quarter turn in order to allow locking or releasing of the assembly, the bodies of the infusion chamber and mobile part (20) of the scraper assembly with passages (24) for this purpose, the shape of which enables them to slide on the wings when the rods are in the released position.

11. Percolator according to claim 10, **characterized in that** front plate (9) has holes (39) for passage of the rods whatever their position, the said rods, after the sweeping phase, projecting beyond the front plate to enable the user to swivel them a quarter turn using wings (22) in order to ensure their release and removal for cleaning and maintenance.

12. Percolator according to claim 10, **characterized in that** for each rod (7) infusion chamber (2) has dual supports (25, 26) with passages (24) arranged on both sides of wings (23) so that the infusion chamber is driven in both directions by the movements of rods (7).

13. Percolator according to any of the aforesaid claims, **characterised in that** infusion chamber (2) is filled from the top using an upper opening (27).

14. Percolator according to any of claims 1 to 12, **characterised in that** infusion chamber (2) is filled from the sides, through side openings (28) enabling the use of two grinders (29, 29') that may be controlled independently, and two separate coffees poured such as normal coffee and decaffeinated coffee, or two additional coffees, as required by the user.
